# EUROPÄISCHE PATENTSCHRIFT

(11) **EP 4 056 863 B1**
(45) Veröffentlichungstag und Bekanntmachung des Hinweises auf die Patenterteilung: **12.06.2024**
(21) Anmeldenummer: 22159097.9
(22) Anmeldetag: 28.02.2022
(51) Int. Cl.: F16B 35/06, F16B 37/06

(54) **FUNKTIONSELEMENT**
FUNCTION ELEMENT
ÉLÉMENT FONCTIONNEL

(30) Priorität: 12.03.2021 DE 102021106103
(43) Veröffentlichungstag der Anmeldung: 14.09.2022
(73) Patentinhaber: Profil Verbindungstechnik GmbH & Co. KG, 61381 Friedrichsdorf (DE)
(72) Erfinder: DIEHL, Oliver, 61250 Usingen (DE)
(74) Vertreter: Manitz Finsterwald Patent- und Rechtsanwaltspartnerschaft mbB

(56) Entgegenhaltungen:
- EP-A1- 3 133 303
- DE-A1- 2 348 754
- DE-A1- 10 241 326
- DE-A1-102004 020 362
- US-A- 3 343 442
- US-A- 4 046 054
- US-A1- 2013 136 558
- US-B1- 6 186 717

## Beschreibung

Die Erfindung betrifft ein Funktionselement, insbesondere Bolzenelement, zur Anbringung an einem Werkstück, wie beispielsweise einem Blechteil.

Solche Funktionselemente bzw. Bolzenelemente sind grundsätzlich bekannt und können dazu dienen, weitere Objekte mittels eines Funktionsbereichs des Funktionselements an dem Werkstück zu befestigen. Die Anbringung des Funktionselements an dem Werkstück erfolgt in vielen Fällen mittels eines umformbaren Nietabschnitts. Weisen das Werkstück und der daran befestigte Nietabschnitt verschiedene Werkstoffe auf, so besteht bei metallischen Bauteilen das Risiko galvanischer Korrosion. Zudem können bei Wärmeausdehnung des Werkstücks und/oder des Funktionselements mechanische Spannungen entstehen, die zur Beschädigung oder Zerstörung des Werkstücks und/oder des Funktionselement führen können. Es kann jedoch erforderlich sein, dass der Funktionsbereich des Funktionselements Eigenschaften aufweist, beispielsweise eine gewisse Materialhärte, die sich durch das Material des Werkstücks nicht erzielen lassen. In einem solchen Fall muss bei bekannten Funktionselementen zumindest hinsichtlich des Funktionsbereichs oder hinsichtlich des Nietabschnitts von der optimalen Ausgestaltung abgewichen werden.

Die DE 102 41 326 A1 offenbart ein Funktionselement mit den Merkmalen des Oberbegriffs des Anspruchs 1. Gattungsfremde Elemente sind beispielsweise in den Dokumenten US 2013/136558 A1, US 3 343 442 A, US 4 046 054 A, DE 23 48 754 A1, DE 10 2004 020362 A1, EP 3 133 303 A1 und US 6 186 717 B1 beschrieben.

Der Erfindung liegt die Aufgabe zugrunde, ein Funktionselement zu schaffen, das eine zuverlässige Befestigung des Funktionselements an einem Werkstück und zugleich eine optimale Ausgestaltung des Funktionsbereichs ermöglicht.

Die Aufgabe wird gelöst durch ein Funktionselement mit den Merkmalen des Anspruchs 1.

Das erfindungsgemäße Funktionselement, insbesondere Bolzenelement, zur Anbringung an einem Werkstück, insbesondere Blechteil, umfasst einen Befestigungsabschnitt, der einen zur Befestigung des Funktionselements an dem Werkstück umformbaren Umformabschnitt aufweist, insbesondere wobei der Umformabschnitt ein Nietabschnitt ist, und einen Funktionsabschnitt mit einem Funktionsbereich, wobei der Funktionsabschnitt mit dem Befestigungsabschnitt drehfest verbunden ist. Der Befestigungsabschnitt und der Funktionsabschnitt sind aus verschiedenen Materialien gefertigt.

Der Erfindung liegt der allgemeine Gedanke zugrunde, den Befestigungsabschnitt des Funktionselements und den Funktionsabschnitt des Funktionselements aus verschiedenen Materialien zu fertigen, sodass jeder Abschnitt optimal an die jeweils zu erfüllenden Anforderungen anpassbar ist. Der Befestigungsabschnitt kann aus einem Material gefertigt sein, welches eine stabile und zuverlässige Befestigung des Funktionselements an dem Werkstück ermöglicht und dabei galvanische Korrosion, mechanische Spannungen durch Wärmeausdehnung und weitere Probleme vermeidet. Insbesondere können der Umformabschnitt und/oder der gesamte Befestigungsabschnitt aus dem gleichen oder einem ähnlichen Material gefertigt sein, wie das Werkstück. Das Material des Funktionsabschnitts kann derart gewählt sein, dass es die ihm zugedachte Funktion optimal erfüllt. Beispielsweise kann das Material des Funktionsabschnitts eine große Härte aufweisen, um ein stabiles Gewinde daran anbringen zu können.

Der Funktionsbereich des Funktionsabschnitts kann dazu dienen, weitere Objekte oder Bauteile an dem Funktionselement zu befestigen. Zu diesem Zweck kann der Funktionsbereich eine oder mehrere Funktionskomponenten aufweisen, wie beispielsweise ein Innen- oder Außengewinde, Steck-, Rast- oder Klemmkomponenten, Haken und/oder eine Bohrung.

Bei dem Funktionselement kann es sich um ein Bolzenelement handeln, dessen Funktionsabschnitt als Bolzenabschnitt ausgebildet, welcher einen Schaftteil umfasst. An dem Schaftteil kann der Funktionsbereich des Bolzenabschnitts angeordnet sein. Der Funktionsbereich kann als glatter Bolzen ausgebildet sein und/oder insbesondere ein Außengewinde umfassen, wobei alternativ oder zusätzlich ein Innengewinde sowie weitere Funktionskomponenten an dem Bolzen vorgesehen sein können. Bei dem Funktionselement kann es sich ferner um ein Mutterelement handeln, dessen Funktionsabschnitt als Mutterabschnitt ausgebildet ist, insbesondere dessen Funktionsbereich eine axialen Durchgangsöffnung und ein Innengewinde aufweist.

Der Funktionsabschnitt und der Befestigungsabschnitt sind erfindungsgemäß drehfest, d.h. relativ zueinander nicht verdrehbar, miteinander verbunden.

Der Befestigungsabschnitt und/oder der Funktionsabschnitt können eine Längsachse des Funktionselements definieren. Der Befestigungsabschnitt und der Funktionsabschnitt können entlang der Längsachse aufeinanderfolgend und/oder koaxial angeordnet sein. Zumindest bereichsweise können der Befestigungsabschnitt und der Funktionsabschnitt entlang der Längsachse einander überlappen. Der Befestigungsabschnitt und/oder der Funktionsabschnitt können rotationssymmetrisch ausgebildet sein, wobei Rotationssymmetrie bezüglich einer Drehung um einen beliebigen Winkel oder bezüglich einer Drehung um einen bestimmten oder mehrere bestimmte Winkel bestehen kann. Insbesondere kann zumindest der Umformabschnitt rotationssymmetrisch ausgebildet sein und beispielsweise eine zylindrische oder hülsenförmige Grundform mit einer runden Grundfläche aufweisen.

Der Befestigungsabschnitt kann Verdrehsicherungsmerkmale aufweisen, die eine drehfeste Anbringung an dem Werkstück ermöglichen, d.h. ein Verdrehen des Befestigungsabschnitts relativ zu dem Werkstück verhindern. Diese können Erhebungen oder Vertiefungen, beispielsweise Nuten oder Rippen, umfassen. Die Verdrehsicherungsmerkmale können an dem Umformabschnitt und/oder an einem anderen Bereich des Befestigungsabschnitts angeordnet sein, beispielsweise an einer radialen Außenseite, einer dem Werkstück zugewandten und/oder an einer mit dem Werkstück in Anlage zu bringenden Fläche des Befestigungsabschnitts. Die Verdrehsicherungsmerkmale können in Umfangsrichtung verteilt, insbesondere gleichmäßig verteilt, angeordnet sein. Der Befestigungsabschnitt und/oder der Umformabschnitt können eine polygonale oder eine anderweitig von einer runden Form abweichende Grundfläche aufweisen, um eine drehfeste Verbindung zwischen dem Befestigungsabschnitt und dem Werkstück zu ermöglichen.

Vorteilhafte Ausbildungen der Erfindung sind den Unteransprüchen, der Beschreibung und der Zeichnung zu entnehmen.

Erfindungsgemäß ist der Befestigungsabschnitt selbststanzend ausgebildet, sodass er in ein Werkstück ohne vorgefertigtes Loch eingestanzt werden kann. Der Befestigungsabschnitt kann eine Stanzkante aufweisen, welche an dem Umformabschnitt und insbesondere an einem axialen Endabschnitt des Umformabschnitts angeordnet sein kann, insbesondere an dem dem Funktionsabschnitt abgewandten Endabschnitt. Alternativ kann der Umformabschnitt dazu vorgesehen sein, in ein in dem Werkstück vorgefertigtes Loch eingesetzt zu werden.

Gemäß einer weiteren Ausführungsform sind der Befestigungsabschnitt und der Funktionsabschnitt jeweils aus einem metallischen Material gefertigt, beispielsweise aus einem Aluminiumwerkstoff oder einem Stahlwerkstoff. Der Befestigungsabschnitt und/oder der Funktionsabschnitt können elektrisch leitend sein und insbesondere zumindest bereichsweise blanke Metallflächen aufweisen, die zur Herstellung eines elektrischen Kontakts vorgesehen sind. Alternativ können der Befestigungsabschnitt und/oder der Funktionsabschnitt aus einem Kunststoffmaterial oder einem Faserverbundwerkstoff gefertigt sein. Je nach Anwendung zahlreiche Materialkombinationen für Funktions- und Befestigungsabschnitt möglich, beispielsweise Kunststoff und Metall, Metall und Metall, Kunststoff und Kunststoff.

Der Befestigungsabschnitt kann einen sich in einer axialen Richtung an den Umformabschnitt anschließenden Kopfteil aufweisen, insbesondere wobei der Kopfteil eine sich in radialer Richtung erstreckende, dem Umformabschnitt zugewandte Kopfteilauflagefläche aufweist. Der Kopfteil, insbesondere die Kopfteilauflagefläche, können dazu vorgesehen sein, in einem Montagezustand des Funktionselements in Anlage mit dem Werkstück zu sein. Der Kopfteil und/oder die Kopfteilauflagefläche können ringförmig ausgestaltet sein. Für eine verdrehsichere Verbindung zwischen Befestigungsabschnitt und Werkstück können an dem Kopfteil und/oder an der Kopfteilauflagefläche ein oder mehrere Verdrehsicherungsmerkmale, wie vorstehend beschrieben, ausgebildet sein.

Der Kopfteil kann ferner eine Kopfteilanlagefläche umfassen, welche sich in radialer Richtung erstrecken kann und insbesondere an einem dem Umformabschnitt abgewandten Endabschnitt des Kopfteils angeordnet sein kann. Die Kopfteilanlagefläche kann als Angriffsfläche für eine Setzeinrichtung zum Einbringen des Funktionselements in ein Werkstück dienen.

Gemäß einer weiteren Ausführungsform weist der Funktionsabschnitt einen ersten Kopplungsabschnitt zur Herstellung einer drehfesten Kopplung mit einem zweiten Kopplungsabschnitt auf, wobei der zweite Kopplungsabschnitt an dem Befestigungsabschnitt ausgebildet ist. Der erste und der zweite Kopplungsabschnitt können an radialen Innen- bzw. Außenseiten des Funktionsabschnitts und des Befestigungsabschnitts angeordnet sein, die in dem Funktionselement benachbart angeordnet sind. Der erste und der zweite Kopplungsabschnitt können auch an benachbarten und/oder miteinander in Kontakt stehenden Flächen des Funktionsabschnitts und des Befestigungsabschnitt angeordnet sein, die eine Erstreckungskomponente senkrecht zur Längsachse des Funktionselements aufweisen und/oder sich senkrecht zur Längsachse erstrecken.

Gemäß einer Ausführungsform weisen der erste und der zweite Kopplungsabschnitt korrespondierende Kopplungsmerkmale auf, die in Eingriff miteinander stehen, so dass ein in Umfangsrichtung wirksamer Formschluss bereitgestellt wird. Beispielsweise handelt es sich bei den korrespondierenden Kopplungsmerkmalen um ineinander eingreifende Erhebungen einerseits und Vertiefungen andererseits, insbesondere etwa Rändelungen, Zahn- oder Keilprofile. Die korrespondierenden Kopplungsmerkmale können positive und negative Formmerkmale, beispielsweise polygonale Formen, Stern- oder Blumenformen, Stifte, etc. umfassen, die ineinander drehfest eingreifen.

Alternativ oder zusätzlich können der erste und der zweite Kopplungsabschnitt stoffschlüssig und/oder kraftschlüssig miteinander verbunden sein, beispielsweise mittels Löten, Kleben, Schweißen oder ähnlicher Methoden. Der erste und der zweite Kopplungsabschnitt können kraftschlüssig miteinander verpresst sein. Eine beliebige Kombination von Formschluss, Kraftschluss und/oder Stoffschluss ist möglich.

Der erste und der zweite Kopplungsabschnitt können grundsätzlich als korrespondierende Gewinde ausgebildet sein. Eine drehfeste Kopplung kann in Einschraubrichtung durch einen axialen Anschlag erzielt werden. In Ausschraubrichtung kann eine drehfeste Kopplung zusätzlich gewährleistet werden, indem eine Ausschraubbewegung in axialer Richtung blockiert wird, beispielsweise mittels eines weiteren axialen Anschlags. Ein solcher Anschlag kann durch eine geeignete Verlagerung von Material, insbesondere durch Abtrennen oder Verformen von Material des Funktionsabschnitts und/oder des Befestigungsabschnitts, erreicht werden, beispielsweise im Zuge der Befestigung des Funktionsabschnitts an dem Befestigungsabschnitt.

Alternativ oder zusätzlich kann der Funktionsabschnitt einen dritten Kopplungsabschnitt zur Herstellung einer zumindest in einer axialen Richtung wirksamen Kopplung mit einem vierten Kopplungsabschnitt aufweisen, der an dem Befestigungsabschnitt ausgebildet ist. Grundsätzlich kann eine axiale Relativbewegung von Funktionsabschnitt und Befestigungsabschnitt entlang der Längsachse des Funktionselements in zwei axiale Richtungen erfolgen. Der dritte und der vierte Kopplungsabschnitt wirken in der Regel derart zusammen, dass eine Relativbewegung von Funktionsabschnitt und Befestigungsabschnitt in einer axialen Richtung begrenzt oder gänzlich verhindert wird. Zusätzlich können der dritte und der vierte Kopplungsabschnitt derart ausgebildet sein, dass sie in beide axialen Richtungen wirksam sind.

In einer Ausführungsform können der dritte und der vierte Kopplungsabschnitt korrespondierende Kopplungsmerkmale aufweisen, die in Eingriff miteinander stehen, so dass ein zumindest in einer axialen Richtung wirksamer Formschluss bereitgestellt wird. Beispielsweise kann es sich bei den korrespondierenden Kopplungsmerkmalen des dritten und vierten Kopplungsabschnitts um Flächen handeln, die in Anlage miteinander sind und welche jeweils zumindest eine Erstreckungskomponente senkrecht zur Längsachse des Funktionselements aufweisen.

Beispielsweise können der dritte und vierte Kopplungsabschnitt konisch ausgebildete Flächen umfassen. Alternativ oder zusätzlich können der dritte und vierte Kopplungsabschnitt stoffschlüssig und/oder kraftschlüssig miteinander verbunden sein.

Um eine Relativbewegung in zumindest die zweite axiale Richtung zu blockieren, kann ein zusätzlicher axialer Anschlag oder Hinterschnitt vorgesehen sein. Dieser kann beispielsweise durch eine geeignete Materialverlagerung, insbesondere durch Abschaben oder Verformen von Material des Funktionsabschnitts und/oder des Befestigungsabschnitts, erzeugt werden, beispielsweise im Zuge der Befestigung des Funktionsabschnitts an dem Befestigungsabschnitt.

Der erste und dritte Kopplungsabschnitt des Funktionsabschnitts und/oder der zweite und vierte Kopplungsabschnitt des Befestigungsabschnitt können zumindest abschnittsweise zusammenfallen, d.h. ein Formschluss-, Kraftschluss- und/oder Stoffschlussmerkmal kann eine Kopplung der Funktionsabschnitts und des Befestigungsabschnitts sowohl in radialer als auch in axialer Richtung bewirken.

Gemäß einer Ausführungsform begrenzt der Umformabschnitt zumindest einen axialen Abschnitt eines Hohlraums des Befestigungsabschnitts in Umfangsrichtung, wobei der Hohlraum auf der dem Kopfteil abgewandten Seite offen ist. Der Hohlraum des Befestigungsabschnitts kann sich in axialer Richtung über den Umformabschnitt hinaus erstrecken, insbesondere in Richtung des Kopfteils. Der Umformabschnitt kann in einem Umformvorgang, beispielsweise einem Nietvorgang, von seiner Innenseite her umgenietet werden, beispielsweise mittels einer Matrize und in radialer Richtung erweitert werden, um das Werkstück zu hintergreifen, sodass eine auszugsichere formschlüssige Verbindung mit dem Werkstück erzeugt wird.

Gemäß einer weiteren Ausführungsform weist der Kopfteil eine axiale Durchgangsöffnung auf, die mit dem Hohlraum in Verbindung steht, insbesondere wobei die Durchgangsöffnung und der Hohlraum koaxial angeordnet sind. Beispielsweise kann der Befestigungsabschnitt eine durchgehende axiale Öffnung aufweisen, die die Durchgangsöffnung und den Hohlraum umfasst.

Gemäß einer Ausführungsform ragt zumindest ein Abschnitt des Funktionsabschnitts in oder durch die Durchgangsöffnung. Insbesondere kann der Funktionsbereich des Funktionsabschnitts aus dem Kopfteil herausragen, vorteilhafterweise auf der dem Umformabschnitt abgewandten Seite, sodass beispielsweise auf der dem Umformabschnitt abgewandten Seite des Werkstücks ein Bauteil an dem Funktionsbereich des Funktionselements befestigt werden kann.

Alternativ oder zusätzlich kann der Funktionsabschnitt hülsenförmig ausgestaltet sein. Die Hülse kann gewissermaßen die Durchgangsöffnung und/oder den Hohlraum auskleiden und beispielsweise ein Innengewinde aufweisen. Wird für den Funktionsabschnitt ein härteres Material, z.B. Stahl, und für den Befestigungsabschnitt ein weicheres Material, z.B. Aluminium, gewählt, so kann beispielsweise ein Funktionselement mit einem vergleichsweise leicht verformbaren Befestigungsabschnitt und einem stabilen, härteren Innengewinde bereitgestellt werden.

Gemäß einer weiteren Ausführungsform weisen die Durchgangsöffnung und/oder der Hohlraum einen Anschlag und/oder eine radiale Schulter auf. Alternativ oder zusätzlich weist die Durchgangsöffnung einen kleineren Innendurchmesser als der Hohlraum auf, so dass ein Anschlag oder eine radiale Schulter gebildet sind. Die Schulter kann beispielsweise stufenförmig oder konusförmig sein. Alternativ oder zusätzlich können die Durchgangsöffnung und/oder der Hohlraum einen ersten und einen zweiten Abschnitt mit verschiedenem Innendurchmesser aufweisen, wobei der Abschnitt mit dem größeren Innendurchmesser dem Umformabschnitt zugewandt sein kann, der Abschnitt mit dem kleineren Innendurchmesser dem Kopfteil.

Der Funktionsabschnitt kann einen radial erweiterten Endabschnitt aufweisen, der mit dem Anschlag oder der Schulter zusammenwirkt. Der radial erweiterte Endabschnitt des Funktionsabschnitts kann beispielsweise durch Umform- oder Niettechniken erzeugt werden. Beispielsweise kann der Funktionsabschnitt in den Hohlraum und/oder die Durchgangsöffnung des Befestigungsabschnitt eingeführt werden, typischerweise mit einem dem radial erweiterten Endabschnitt abgewandten Ende voran und insbesondere von Seiten des Umformabschnitts her. Der radial erweiterte Endabschnitt des Funktionsabschnitts kann gerade derart bemessen sein, dass er mit dem Anschlag oder der Schulter in Eingriff gelangt und auf diese Weise in einer axialen Richtung mit dem Befestigungsabschnitt gekoppelt ist. Der radial erweiterte Endabschnitt des Funktionsabschnitts, insbesondere eine sich in radialer Richtung erstreckende Fläche oder eine Fläche des radial erweiterten Endabschnitts mit zumindest einer radialen Erstreckungskomponente, kann dem dritten Kopplungsabschnitt zugeordnet sein, während der Anschlag oder die Schulter dem vierten Kopplungsabschnitt zugeordnet sein können.

Der erste Kopplungsabschnitt kann an einem Endbereich, insbesondere einem radial erweiterten Endbereich, des Funktionsabschnitts angeordnet sein. Der erste und der dritte Kopplungsabschnitt können ferner auch an einem Schaftteil des Funktionsabschnitts angeordnet sein. Der zweite und der vierte Kopplungsabschnitt können in der Durchgangsbohrung, an der Schulter oder an einer Innenwand des Hohlraums angeordnet sein, bzw. durch die Schulter oder Bereiche der Innenwand des Hohlraums bzw. der Durchgangsbohrung ausgebildet sein.

Gemäß einer weiteren Ausführungsform ist ein Abschnitt der Innenwand des Hohlraums und/oder der Durchgangsöffnung umgeformt, um einen nach radial innen ragenden Hinterschnitt zu erzeugen, insbesondere durch einen Abschabprozess.

Beispielsweise kann der Hinterschnitt während des Einbringens und Befestigens des Funktionsabschnitts an dem Befestigungsabschnitt erzeugt werden. Insbesondere kann zuerst eine formschlüssige Verbindung zwischen dem Funktionsabschnitt und dem Befestigungsabschnitt hergestellt werden, welche durch weitere Krafteinwirkung und Relativbewegung von Funktionsabschnitt und Befestigungsabschnitt zueinander zu einem Abschaben oder Verformen von Material des Funktionsabschnitts und/oder Befestigungsabschnitts führt. Alternativ kann der Hinterschnitt nach dem Einbringen des Funktionsabschnitts in den Befestigungsabschnitt erzeugt werden, um beide in einer bestimmten Relativposition zu sichern. Der erzeugte Hinterschnitt kann Teil des ersten, zweiten, dritten und/oder vierten Kopplungsabschnitts sein.

Ein weiterer Aspekt der Erfindung betrifft eine Funktionseinheit, welche ein Funktionselement wie vorstehend beschrieben und ein Fixierelement umfasst. Das Fixierelement ist an dem Funktionsbereich des Funktionselements fixierbar, insbesondere lösbar, insbesondere wobei das Fixierelement eine Fixierelementanlagefläche aufweist, die in einem an dem Funktionselement montierten Zustand des Fixierelements dem Kopfteil des Befestigungsabschnitts zugewandt ist.

Beispielsweise kann die Funktionseinheit dazu verwendet werden, ein weiteres Objekt zwischen dem Fixierelement, insbesondere der Fixierelementanlagefläche, und dem Kopfteil, insbesondere einer Kopfteilanlagefläche, einzuklemmen. Um das weitere Objekt verdrehsicher an der Funktionseinheit zu sichern, können die Fixierelementanlagefläche und/oder die Kopfteilanlagefläche entsprechende Verdrehsicherungsmerkmale, beispielsweise Rippen oder Rillen, aufweisen.

Das Fixierelement kann mit dem Funktionselement verschraubt sein. Die Fixierelementanlagefläche kann in einem dem Kopfteil bzw. dem Werkstück zugewandten Endbereich des Fixierelements angeordnet sein. Das Fixierelement kann axiale Durchgangsöffnung aufweisen. Beispielsweise kann das Fixierelement ein Mutterelement sein, welches auf Funktionsabschnitt, insbesondere dessen Funktionsbereich ein Außengewinde aufweist, aufschraubbar ist. Das Fixierelement kann eine Schraube oder ein Bolzen sein, und insbesondere in einen Funktionsabschnitt mit einem Innengewinde einschraubbar sein. Die Fixierelementanlagefläche kann eine dem Kopfteil zugewandte Unterseite eines Schraubenkopfes umfassen. Das Fixierelement kann eine Rast-, Steck- oder Klemmvorrichtung, einen Haken, Splint oder ähnliche geeignete Vorrichtungen umfassen.

Eine Funktionseinheit mit einem als Bolzenabschnitt ausgebildeten Funktionsabschnitt und einer Fixiermutter kann dazu dienen, einen Masseanschluss bereitzustellen, durch den ein elektrischer Kontakt zwischen einem Kabelschuh und einem Werkstück, in das die Funktionseinheit eingebracht ist, herstellbar ist, indem der Kabelschuh zwischen der Fixiermutter und einem Kopfteil des Befestigungsabschnitts eingeklemmt wird. Um blanke Metallflächen im Bereich der Kopfteilanlagefläche, der Fixierelementanlagefläche und/oder des Bolzenabschnitts bereitzustellen, kann die Funktionseinheit vorteilhafterweise in vollständig montierten Zustand lackiert werden, d.h. mit verschraubter Fixiermutter. Wird das Fixierelement anschließend von dem Bolzenelement abgeschraubt, so werden die unlackierten blanken Metallflächen des Bolzenabschnitts, der Fixierelementanlagefläche und der Kopfteilanlagefläche freigelegt und können durch den Kabelschuh kontaktiert werden.

Gemäß einer Ausführungsform weist das Fixierelement einen Angriffsabschnitt für ein Werkzeug zur Befestigung des Fixierelements an dem Funktionsbereich, insbesondere ein Formmerkmal, und/oder einen Setzabschnitt, insbesondere eine im Wesentlichen ringförmige Setzfläche, auf, wobei der Setzabschnitt zum Angreifen einer Setzeinrichtung zur Befestigung der Funktionseinheit an dem Werkstück geeignet ist. Bei dem Angriffsabschnitt kann es sich beispielsweise um ein Antriebsprofil handeln wie z.B. ein vier- oder sechskantförmiges Formmerkmal, einen Schlitz oder Kreuzschlitz, das beispielsweise an einem der Fixierelementanlagefläche abgewandten Endabschnitt des Fixierelements angeordnet ist. Der Setzabschnitt kann beispielsweise an einem Flanschabschnitt des Fixierelements angeordnet sein und insbesondere der Fixierelementanlagefläche abgewandt sein.

Ein weiterer Aspekt der vorliegenden Erfindung bezieht sich auf ein Zusammenbauteil, umfassend ein Funktionselement oder eine Funktionseinheit wie vorstehend beschrieben und ein Werkstück, insbesondere ein Blechteil, wobei der Befestigungsabschnitt des Funktionselements an dem Werkstück in einem Befestigungsbereich des Werkstücks formschlüssig durch ein Umformverfahren angebracht ist, insbesondere durch Nietverfahren. Die Längsachse des Funktionselements kann senkrecht zu einer Werkstückoberfläche angeordnet sein.

Das Werkstück kann aus einem metallischen Material oder aus einem Kunststoff ausgebildet sein, insbesondere kann es einen Faserverbundwerkstoff umfassen.

Gemäß einer Ausführungsform sind der Umformabschnitt des Befestigungsabschnitts, insbesondere der gesamte Befestigungsabschnitt, und der Befestigungsbereich des Werkstücks, insbesondere das gesamte Werkstück, aus dem gleichen Material gefertigt. So wird eine zuverlässige Verbindung zwischen dem Befestigungsabschnitt und dem Werkstück hergestellt, ohne dass es zwischen dem Werkstück und dem Befestigungsabschnitt zu galvanischer Korrosion kommen kann, oder dass mit dem Eintrag mechanischer Spannung durch unterschiedliche Temperaturausdehnung des Befestigungsabschnitts und des Werkstücks zu rechnen ist. Der Funktionsabschnitt kann aus einem Material gefertigt sein, das eine optimale Erfüllung der vorgesehenen Funktion ermöglicht. Das Material kann beispielsweise weicher oder härter sein als das des Befestigungsabschnitts.

Ein weiterer Aspekt der vorliegenden Erfindung betrifft ein Verfahren zur Herstellung eines Zusammenbauteils wie vorstehend beschrieben. Das Verfahren umfasst die Schritte: (i) Bereitstellen eines Funktionselements oder einer Funktionseinheit wie vorstehend beschrieben, (ii) Einbringen des Befestigungsabschnitts in ein vorgefertigtes Loch in dem Werkstück oder selbststanzendes Einbringen des Befestigungsabschnitts in das Werkstück, (iii) Umformen des Umformabschnitts zur Erzeugung eines das Werkstück hintergreifenden Hinterschnitts zur Befestigung des Funktionselements oder der Funktionseinheit an dem Werkstück. Durch dieses Verfahren können die Vorteile, die im Zusammenhang mit dem Funktionselement und der Funktionseinheit vorstehend beschrieben wurden, gleichsam erreicht werden.

Gemäß einer Ausführungsform ist bei dem Verfahren eine Setzeinrichtung vorgesehen, die mit dem Befestigungsabschnitt, insbesondere einem Kopfteil des Befestigungsabschnitts, oder dem Fixierelement, insbesondere einem Setzabschnitt, zusammenwirkt, um das Funktionselement oder die Funktionseinheit gegen das Werkstück zu pressen. Als Setzeinrichtung können dabei grundsätzlich bekannte Vorrichtungen dienen, welche einen Stempel und eine geeignete Matrize aufweisen.

Die Erfindung wird im Folgenden rein beispielhaft anhand verschiedener Ausführungsformen und unter Bezugnahme auf die Zeichnungen beschrieben. Es zeigen:
- Fig. 1A: eine Seiten- und Querschnittsansicht eines Funktionselements gemäß einer ersten Ausführungsform,
- Fig. 1B: eine perspektivische Ansicht des Funktionselements von Fig. 1A,
- Fig. 1C: eine Explosionszeichnung des Funktionselements von Fig. 1A,
- Fig. 2A: eine perspektivische Ansicht einer Funktionseinheit, umfassend das Funktionselement von Fig. 1A und ein Fixierelement, betrachtet von Seiten des Fixierelements her,
- Fig. 2B: eine perspektivische Ansicht der Funktionseinheit von Fig. 2A, betrachtet von Seiten des Befestigungsabschnitts her,
- Fig. 2C: eine Stirnansicht der Funktionseinheit von Fig. 2A, betrachtet von Seiten des Fixierelements her,
- Fig. 2D: eine Seitenansicht der Funktionseinheit von Fig. 2A,
- Fig. 2E: eine Stirnansicht der Funktionseinheit von Fig. 2A, betrachtet von Seiten des Befestigungsabschnitts her,
- Fig. 3: eine Explosionszeichnung der Funktionseinheit von Fig. 2A,
- Fig. 4: ein Zusammenbauteil, umfassend die Funktionseinheit von Fig. 2A und ein Werkstück,
- Fig. 5A: eine Seiten- und Querschnittsansicht eines Funktionselements gemäß einer zweiten Ausführungsform,
- Fig. 5B: eine perspektivische Ansicht des Funktionselements von Fig. 5A,
- Fig. 6A: eine Seiten- und Querschnittsansicht eines Funktionselements gemäß einer dritten Ausführungsform,
- Fig. 6B: eine perspektivische Ansicht des Funktionselements von Fig. 6A,
- Fig. 7A: eine Seiten- und Querschnittsansicht eines Funktionselements gemäß einer vierten Ausführungsform,
- Fig. 7B: eine perspektivische Ansicht des Funktionselements von Fig. 7A.

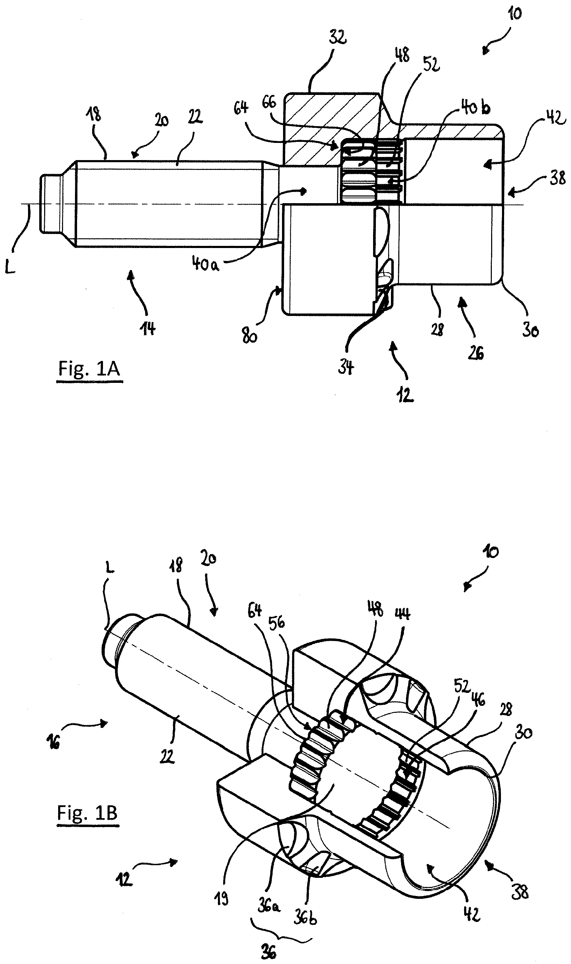

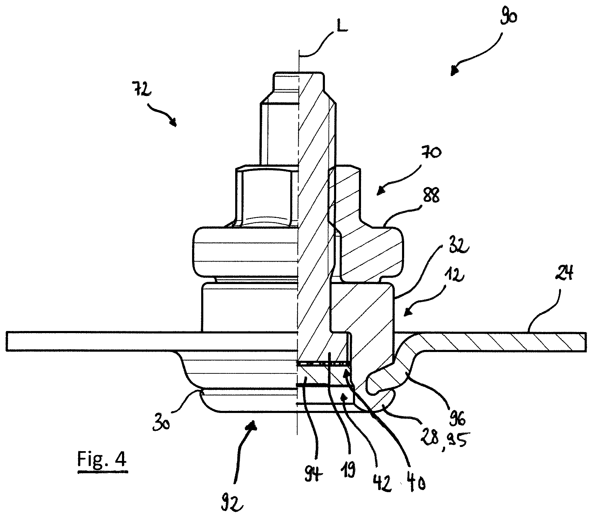

Fig. 1A-1C zeigen ein Funktionselement 10 mit einem Befestigungsabschnitt 12 und einem Funktionsabschnitt 14. Der Befestigungsabschnitt 12 und der Funktionsabschnitt 14 sind koaxial und entlang einer gemeinsamen Längsachse L angeordnet und drehfest miteinander verbunden (Fig. 1A, 1B). Der Befestigungsabschnitt 12 dient zur Befestigung des Funktionselements 10 an einem Werkstück 24 (vgl. Fig. 4), während der Funktionsabschnitt 14 in der gezeigten Ausführungsform dazu vorgesehen ist, weitere Objekte an dem Funktionselement 10 zu befestigen (nicht gezeigt).

Der Befestigungsabschnitt 12 und der Funktionsabschnitt 14 sind aus verschiedenen Materialien gefertigt, beispielsweise aus verschiedenen metallischen Materialien. Das Material des Befestigungsabschnitts 12 ist auf eine optimale Befestigung an dem Werkstück 24 ausgerichtet. Der Befestigungsabschnitt 12 kann dazu beispielsweise aus dem gleichen Material wie das Werkstück 24 gefertigt sein, beispielsweise aus Aluminium. Der Funktionsabschnitt 14 ist aus einem Material gefertigt, das auf das optimale Anbringen weiterer Objekte ausgerichtet ist und beispielsweise das Einbringen eines stabilen Gewindes ermöglicht. Konkret kann der Funktionsabschnitt 14 aus einem Stahlwerkstoff gefertigt sein.

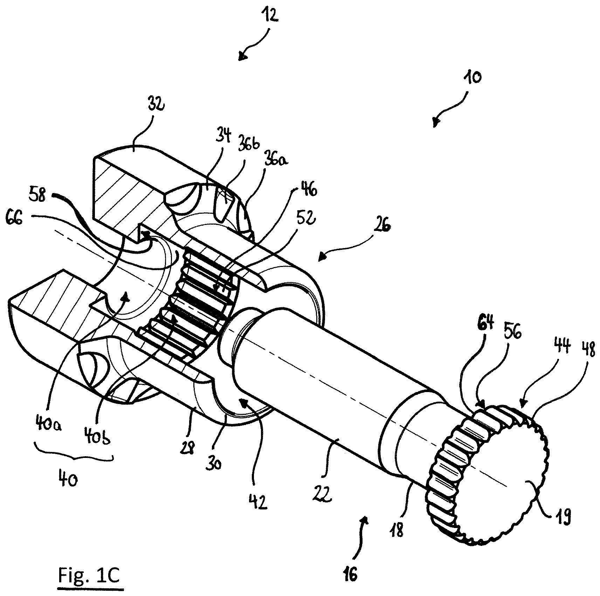

Der Befestigungsabschnitt 12 ist hülsenartig ausgebildet (Fig. 1C). Er umfasst einen Umformabschnitt 26, welcher als umformbarer Nietabschnitt 28 ausgebildet ist. Der Nietabschnitt 28 ist selbststanzend und umfasst an seinem dem Schaftteil 18 abgewandten Ende eine Stanzkante 30 zur Erzeugung einer Öffnung in dem Werkstück 24 zum Einsetzen des Befestigungsabschnitts 12.

In axialer Richtung schließt sich ein Kopfteil 32 auf der der Stanzkante 30 abgewandten Seite an den Umformabschnitt 26 an. Auf der dem Umformabschnitt 26 zugewandten Seite weist der Kopfteil 32 eine sich in radialer Richtung erstreckende Kopfteilauflagefläche 34 auf, welche in einem Montagezustand, in welchem das Funktionselement 10 an dem Werkstück 24 angebracht ist, in Anlage mit dem Werkstück 24 gelangt.

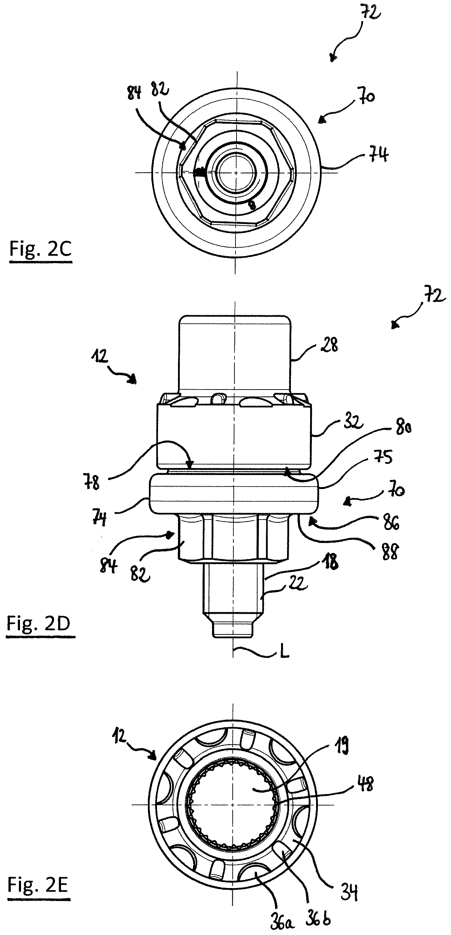

Um eine verdrehsichere Befestigung des Befestigungsabschnitts 12 an dem Werkstück 24 zu gewährleisten, weist die Kopfteilauflagefläche 34 mehrere Verdrehsicherungsmerkmale 36 auf, die in Umfangsrichtung in regelmäßigen Abständen angeordnet sind (vgl. auch Fig. 2E). Die Verdrehsicherungsmerkmale 36 umfassen in alternierender Anordnung Ausnehmungen 36a, in welche Material des Werkstücks 24 einfließen kann, und Erhebungen 36b, welche sich in das Material des Werkstücks 24 eingraben können. Alternativ oder zusätzlich können Verdrehsicherungsmerkmale 36 an dem Umformabschnitt 26 oder an einer radialen Außenseite des Kopfteils 32 angeordnet sein (nicht gezeigt).

Der Befestigungsabschnitt 12 weist eine durchgehende axiale Öffnung 38 auf (Fig. 1C), welche mehrere sich in axialer Richtung aneinander anschließende Abschnitte aufweist. Die axiale Öffnung 38 umfasst eine in dem Kopfteil 32 angeordnete Durchgangsöffnung 40 und einen Hohlraum 42, der von dem Umformabschnitt 26 in Umfangsrichtung begrenzt ist. Der Hohlraum 42 ist auf der dem Kopfteil 32 abgewandten Seite, d.h. seitens der Stanzkante 30, offen und steht auf Seiten des Kopfteils 32 mit der zu dem Hohlraum 42 koaxial angeordneten Durchgangsöffnung 40 in Verbindung. Die Durchgangsöffnung 40 weist an der dem Umformabschnitt 26 abgewandten Seite einen ersten Abschnitt 40a mit einem geringeren Innendurchmesser auf und an der dem Umformabschnitt 26 zugewandten Seite einen zweiten Abschnitt 40b mit einem größeren Innendurchmesser auf. An dem Übergang zwischen dem ersten Abschnitt 40a und dem zweiten Abschnitt 40b befindet sich eine Schulter 66, die sich in radialer Richtung erstreckt. Der zweite Abschnitt 40b weist einen kleineren Innendurchmesser als der Hohlraum 42 auf.

Der Funktionsabschnitt 14 ist in der gezeigten Ausführungsform als Bolzenabschnitt 16 mit einem Schaftteil 18 ausgebildet, wobei der Schaftteil 18 einen Funktionsbereich 20 mit einem Außengewinde 22 umfasst. An dem Bolzenabschnitt 16 können mittels des Außengewindes 22 weitere Objekte festgeschraubt werden.

Zur Befestigung an dem Befestigungsabschnitt 12 weist der Funktionsabschnitt 14 an seinem dem Schaftteil 18 abgewandten Ende einen radial erweiterten Endabschnitt 19 auf. Der radial erweiterte Endabschnitt 19 des Funktionsabschnitts 14 ist in der axialen Öffnung 38 des Befestigungsabschnitts 12 aufgenommen, während ein Abschnitt des Funktionsabschnitts 14, konkret ein Großteil des Schaftteils 18 durch die Durchgangsöffnung 40 hindurch und auf der dem Umformabschnitt 26 abgewandten Seite aus der Durchgangsöffnung 40 herausragt (Fig. 1B, 1C). Der Funktionsbereich 20 ist dadurch für die Befestigung weiterer Objekte zugänglich.

Das Außengewinde 22 kann, wie in Fig. 1C gezeigt, bereits an dem Schaftteil 18 angebracht sein, bevor der Bolzenabschnitt 16 an dem Befestigungsabschnitt 12 befestigt wird. Ferner kann jedoch vorgesehen sein, einen Bolzenabschnitt 16 mit einem zunächst glatten Schaftteil 18 mit dem Befestigungsabschnitt 12 zu verbinden und das Außengewinde 22 erst anschließend durch ein Schneid- oder Walzverfahren aufzubringen. In diesem Fall endet das Außengewinde 22, wie in Fig. 1A-1C gezeigt, in axialer Richtung spätestens dort, wo der Schaftteil 18 in den Befestigungsabschnitt 12 eintritt.

Eine drehfeste Kopplung erfolgt zwischen einem an dem Funktionsabschnitt 14 angeordneten ersten Kopplungsabschnitt 44 und einem an dem Befestigungsabschnitt 12 angeordneten zweiten Kopplungsabschnitt 46, die miteinander in Eingriff stehen. Gemäß der ersten Ausführungsform ist der erste Kopplungsabschnitt 44 radial außenseitig an dem radial erweiterten Endabschnitt 19 des Funktionsabschnitts 14 angeordnet und umfasst eine in Umfangsrichtung umlaufende erste Verzahnung bzw. Rändelung 48, welche als erstes Kopplungsmerkmal dient.

Der zweite Kopplungsabschnitt 46 ist radial innenseitig in dem Befestigungselement 12 angeordnet, konkret in der Durchgangsöffnung 40 des Kopfteils 32, und umfasst ein zweites Kopplungsmerkmal, welches als zu dem ersten Kopplungsmerkmal komplementäre zweite Verzahnung bzw. Rändelung 52 ausgebildet ist. In dem zusammengesetzten Funktionselement 10 stehen die Verzahnungen 48 und 52 miteinander in Eingriff, sodass ein in Umfangsrichtung wirkender Formschluss ein Verdrehen des Befestigungsabschnitts 12 und des Funktionsabschnitts 14 relativ zueinander verhindert.

Um den Funktionsabschnitt 14 in einer axialen Richtung mit dem Befestigungsabschnitt 12 zu koppeln, sind an dem Funktionsabschnitt 14 ein dritter Kopplungsabschnitt 56 und an dem Befestigungsabschnitt 12 ein vierter Kopplungsabschnitt 58 mit miteinander korrespondierenden Kopplungsmerkmale vorgesehen. Der dritte Kopplungsabschnitt 56 ist an einer dem Schaftteil 18 zugewandten, sich radial erstreckenden Fläche 64 des radial erweiterten Endabschnitts 19 angeordnet. Der vierte Kopplungsabschnitt 58 ist in der Durchgangsöffnung 40 des Kopfteils 32 angeordnet und umfasst die radiale Schulter 66 (Fig. 1C).

Die radiale Schulter 66 steht mit der sich radial erstreckenden Fläche 64 in Eingriff (Fig. 1A) und bewirkt einen in axialer Richtung wirkenden Formschluss zwischen dem Befestigungsabschnitt 12 und dem Funktionsabschnitt 14, der den Funktionsabschnitt 14 daran hindert, auf Seiten des Kopfteils 32 vollständig durch die Durchgangsöffnung 40 hindurchzutreten.

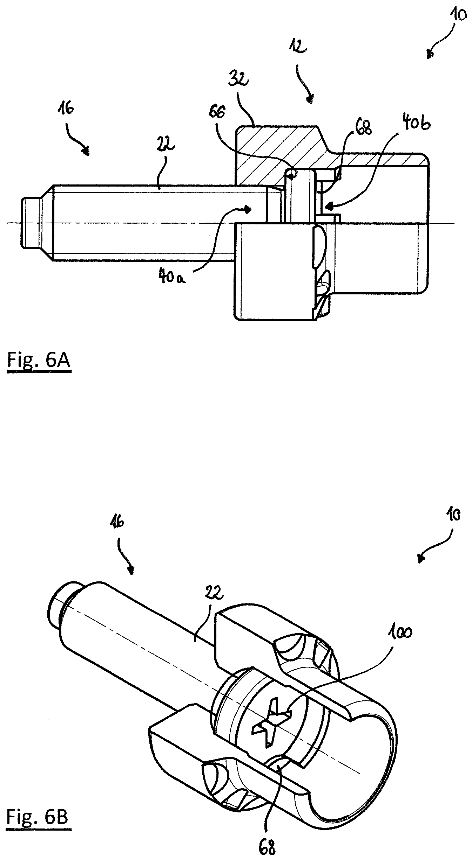

Um zusätzlich eine Kopplung in die entgegengesetzte axiale Richtung zu bewirken, können der dritte und/oder vierte Kopplungsabschnitt 56 und 58 weitere Kopplungsmerkmale umfassen. Beispielsweise kann beim Einbringen des Funktionsabschnitts 14 in die axiale Öffnung 38 Material von der Innenwand des Hohlraums 42 und/oder der Durchgangsöffnung 40 abgeschabt oder anderweitig umgeformt und hinter eine dem Umformabschnitt 26 zugewandte Seite des radialen Endabschnitts 19 gedrängt werden, sodass das Material einen radial nach innen ragenden Hinterschnitt 68 erzeugt (vgl. Fig. 6B).

Alternativ oder zusätzlich kann der Innendurchmesser der zweiten Verzahnung 52 des zweiten Kopplungsabschnitts 46 etwas kleiner sein, als der Außendurchmesser der ersten Verzahnung 48 des ersten Kopplungsabschnitts 44. Durch Einpressen des Funktionsabschnitts 14 in den Befestigungsabschnitt 12 kann eine kraftschlüssige Befestigung erfolgen, sodass die verpressten Verzahnungen 48 und 52 nicht nur eine Verdrehsicherung in radialer Richtung, sondern auch eine in zwei Richtungen wirkende axiale Auszugsicherung des Funktionsabschnitts 14 bewirken. Die erste Verzahnung 48 kann so zugleich als Kopplungsmerkmal des ersten und dritten Kopplungsabschnitts 44 und 56 wirken, die zweite Verzahnung 52 zugleich als Kopplungsmerkmal des zweiten und vierten Kopplungsabschnitts 46 und 58.

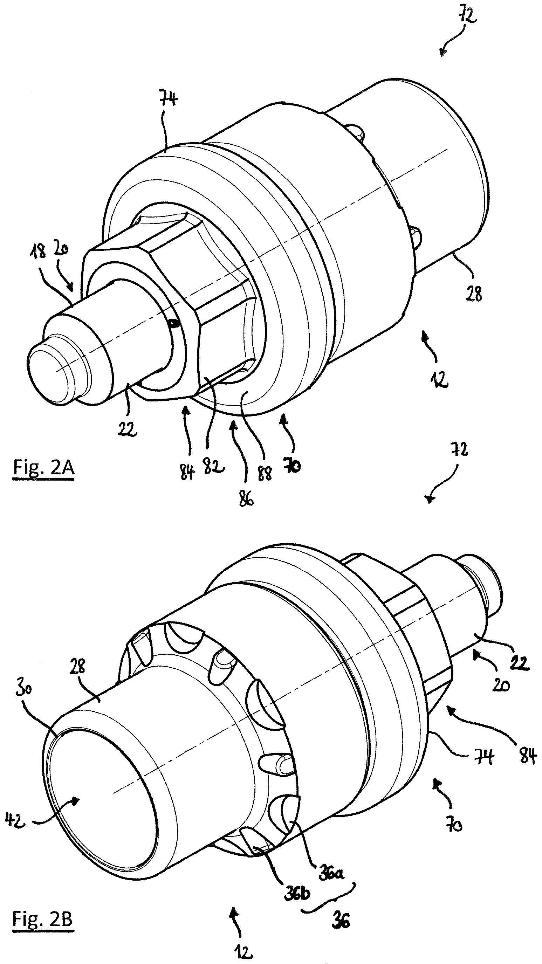

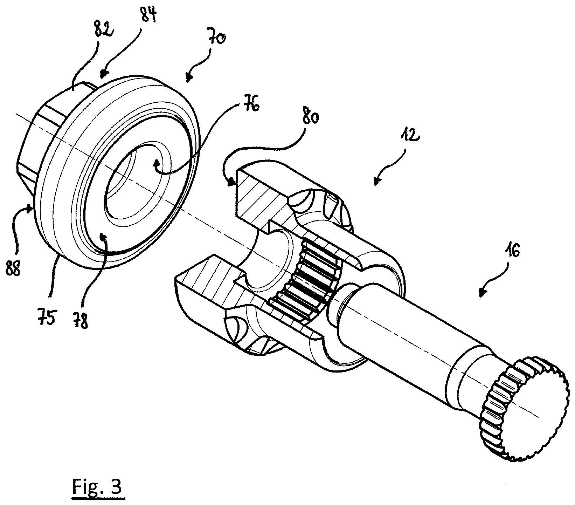

Fig. 2A und 2B zeigen perspektivische Ansichten einer Funktionseinheit 72, welche neben dem Funktionselement 10 gemäß Fig. 1A-1C ein koaxial angeordnetes Fixierelement 70 umfasst, welches als Fixiermutter 74 ausgebildet ist. Die Fixiermutter 74 weist ein Innengewinde 76 auf (siehe Fig. 3) und ist lösbar mit dem Außengewinde 22 des Bolzenabschnitts 16 verschraubt.

Die Fixiermutter 74 weist einen Flanschabschnitt 75 mit einer Fixierelementanlagefläche 78 auf (Fig. 3), die in einem an dem Funktionselement 10 befestigten Zustand dem Kopfteil 32 und insbesondere einer sich radial erstreckenden Kopfteilanlagefläche 80 zugewandt ist. Zwischen der Fixiermutter 74 und dem Befestigungsabschnitt 12 und insbesondere zwischen der Kopfteilanlagefläche 80 und der Fixierelementanlagefläche 78 kann ein weiteres Objekt eingeklemmt werden, insbesondere ein ringförmiges Objekt, welches nach Entfernen der Fixiermutter 74 über den Schaftteil 18 geführt und durch erneutes Festschrauben der Fixiermutter 74 festgeklemmt werden kann, ohne dass das Objekt selbst gedreht werden muss. Bei dem Objekt kann es sich beispielsweise um einen Kabelschuh handeln. Objekte verschiedener axialer Erstreckung können durch variables Festziehen der Fixiermutter 74 auf dem Außengewinde 22 fixiert werden.

Zum Festschrauben und Lösen weist die Fixiermutter 74 einen Angriffsabschnitt 84 für ein Werkzeug auf, im vorliegenden Fall ein im Wesentlichen sechseckiges Antriebsprofil 82, welches mittels eines entsprechenden Schraubwerkzeugs betätigt werden kann (Fig. 2C). Der Angriffsabschnitt 84 ist an einem der Fixierelementanlagefläche abgewandten Endabschnitt der Fixiermutter 74 angeordnet. Der Flanschabschnitt 75 weist auf seiner der Fixierelementanlagefläche 78 abgewandten Seite einen Setzabschnitt 86 auf, welcher eine ringförmige Setzfläche 88 umfasst, die sich um das Antriebsprofil 82 erstreckt. An der Setzfläche 88 kann eine Setzeinrichtung zur Befestigung der Funktionseinheit 72 an dem Werkstück 24 angreifen, um ein Zusammenbauteil 90 gemäß Fig. 4 herzustellen.

Zur Herstellung des Zusammenbauteils 90 wird der Befestigungsabschnitt 12 der Funktionseinheit 70 in das Werkstück 24 eingebracht, wobei ein Loch 92 zur Aufnahme des Nietabschnitts 28 in dem Werkstück durch die Stanzkante 30 selbststanzend erzeugt wird. Das Material des selbststanzenden Befestigungsabschnitts 12 kann dem des Werkstücks 24 entsprechen oder beispielsweise etwas härter sein. Die benötigte Einstanzkraft kann durch eine Setzeinrichtung (nicht gezeigt) aufgebracht werden, die entlang der Längsachse L auf die Setzfläche 88 einwirkt, um die Funktionseinheit 72 gegen das Werkstück 24 zu pressen. Eine geeignete Matrize (nicht gezeigt) kann auf der der einzustanzenden Funktionseinheit 72 abgewandten Seite des Werkstücks 24 zum Aufbringen einer Gegenkraft vorgesehen sein.

Beim Einstanzen des Befestigungsabschnitts 12 in das Werkstück 24 wird ein Stanzbutzen 94 erzeugt. Der Stanzbutzen 94 wird in der gezeigten Ausführungsform durch den Hohlraum 42 des Umformabschnitts 26 zumindest abschnittsweise in einen Abschnitt der Durchgangsöffnung 40 gepresst, der einen etwas geringeren Innendurchmesser aufweist als der Hohlraum 42. So wird der Stanzbutzen 94 form- und/oder kraftschlüssig in dem Befestigungsabschnitt 12 gesichert.

Um die Sicherung des Stanzbutzens 94 in dem Befestigungsabschnitt 12 besonders zuverlässig zu gestalten, kann, insbesondere mittels einer Matrize, Material der Rändelung 52 des zweiten Kopplungsabschnitts 46 mit dem Stanzbutzen 94 in Eingriff gebracht werden. Dazu kann der Stanzbutzen 94 mit der Rändelung 52 verpresst werden. Alternativ oder zusätzlich kann die Rändelung 52 in einem dem Nietabschnitt 28 zugewandten Bereich, insbesondere durch eine Matrize, derart verformt, beispielsweise abgeschabt, und mit dem Stanzbutzen 94 in Eingriff gebracht werden, dass dieser besonders zuverlässig in dem Befestigungsabschnitt 12 gesichert wird. Die formschlüssige Verbindung zwischen dem Befestigungsabschnitt 12 und dem Stanzbutzen 94 kann auf diese Weise verstärkt werden.

Der umformbare Nietabschnitt 28 kann im Zuge des Einstanzvorgangs, insbesondere durch dieselbe Setzeinrichtung, insbesondere mit einer geeigneten Matrize, in einem Nietverfahren umgeformt werden, insbesondere in radialer Richtung, um einen Hinterschnitt 95 zu erzeugen, der das Werkstück 24 und speziell den Rand des Loch 92 hintergreift, um die Funktionseinheit 72 formschlüssig an dem Werkstück zu befestigen. Dabei kann eine dom- oder sickenartige Verformung 96 des Werkstücks 24 in axialer Richtung und ein Eintauchen des Kopfteils 32 in die domartige Verformung 96 wie in Fig. 4 vorgesehen sein.

Material des Werkstücks 24 kann durch die im Zuge des Einstanz- und/oder Umformvorgangs aufgebrachte Kraft der Setzeinrichtung in die Ausnehmungen 36a einfließen und/oder von den Erhebungen 36b derart verdrängt werden, dass eine verdrehsichere Verbindung zwischen Werkstück 24 und Befestigungsabschnitt 12 entsteht. In Kombination mit der drehfesten Verbindung von Befestigungsabschnitt 12 und Funktionsabschnitt 14 ergibt sich an dem Werkstück 24 ein drehfester Funktionsbereich 20 zur Befestigung eines weiteren Objekts.

Soll ein Funktionselement 10 gemäß Fig. 1A-1C anstelle der Funktionseinheit 72 in das Werkstück 24 eingebracht werden, so kann die Setzeinrichtung an dem Kopfteil 32 des Funktionselements 10 angreifen, insbesondere an der sich in radialer Richtung erstreckenden Kopfteilanlagefläche 80. Der weitere Setzvorgang kann wie beschrieben erfolgen.

Das Werkstück 24 kann insbesondere ein Blechteil sein, beispielsweise ein Karosserieteil aus Metall. Der Umformabschnitt 26 oder der gesamte Befestigungsabschnitt 12 können aus dem gleichen Material gefertigt sein wie das Werkstück 24, um eine stabile und gegen galvanische Korrosion sowie Wärmeausdehnung unempfindliche Befestigung zu gewährleisten. Der Funktionsabschnitt 14 kann ebenfalls aus Metall gefertigt sein, beispielsweise aus einem anderen metallischen Werkstoff oder einer anderen Legierung des Werkstoffs des Befestigungsabschnitts 12. Je nach Anwendung kann der Funktionsabschnitt 14 auch aus einem Kunststoff- oder Faserverbundwerkstoff gefertigt sein.

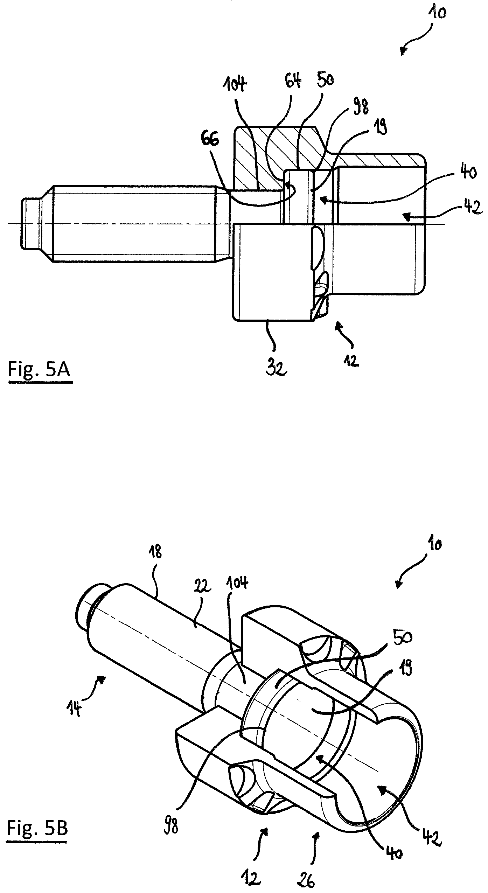

Fig. 5A, 5B zeigen ein Funktionselement 10 gemäß einer zweiten Ausführungsform. Das Funktionselement 10 entspricht in wesentlichen Bestandteilen dem Funktionselement 10 gemäß der ersten Ausführungsform. Abweichend davon ist gemäß Fig. 5A, 5B eine stoffschlüssige Verbindung zwischen dem Befestigungsabschnitt 12 und dem Funktionsabschnitt 14 vorgesehen. Der erste Kopplungsbereich 44 und der zweite Kopplungsbereich 46 weisen daher keine Rändelung oder Verzahnung auf, sondern werden, wie der dritte und vierte Kopplungsbereich 56 und 58, durch glatte Oberflächen gebildet. Bei einer stoffschlüssigen Verbindung ist die Unterscheidung zwischen denjenigen Kopplungsbereichen, welche eine radiale Verdrehung verhindern, und denjenigen Kopplungsbereichen, welche eine axiale Verschiebung verhindern, insofern hinfällig, als ein Stoffschluss an beliebiger Stelle jede Relativbewegung von Befestigungsabschnitt 12 und Funktionsabschnitt 14 verhindern kann. Somit können die ersten und dritten Kopplungsbereiche 44 und 56 an dem Bolzenabschnitt 16 und die zweiten und vierten Kopplungsabschnitte 56 und 58 an dem Befestigungsabschnitt 12 zusammenfallen.

Die stoffschlüssige Verbindung kann wahlweise, insbesondere abhängig von den Materialien des Befestigungsabschnitts 12 und des Funktionsabschnitts 14, durch Kleben, Löten, Schweißen oder ähnliche Verfahren erzeugt werden. Die Verbindung kann flächig, entlang von Verbindungslinien, und/oder punktweise erfolgen. Besonders stabil kann eine vollflächige Verklebung sein, welche sich an einer radialen Außenseite 50 des radial erweiterten Endabschnitts 19 und entlang der sich radial erstreckenden Fläche 64 des radial erweiterten Endabschnitts 19 erstreckt, sowie korrespondierend dazu radial innenseitig in der Durchgangsöffnung 40 des Kopfteils 32 sowie an der sich radial erstreckenden Schulter 66 der Durchgangsöffnung 40. Weiterhin können auch der erste Abschnitt 40a der Durchgangsöffnung 40 und der korrespondierende Abschnitt des Schaftteils 104 miteinander verklebt sein. Bestehen der Funktionsabschnitt 14 und der Befestigungsabschnitt 12 aus verschiedenen metallischen Materialien, so kann eine vollflächige Verklebung als Schutzschicht zur Verhinderung galvanischer Korrosion beitragen.

Ist eine Schweiß- oder Lötverbindung vorgesehen, so kann diese insbesondere entlang von Punkten oder Linien erfolgen, die die vorgenannten Flächen begrenzen und die für ein Schweiß- oder Lötwerkzeug zugänglich sind. Beispielsweise kann eine solche Verbindung entlang der Kontaktlinie 98 des dem Schaftteil 18 abgewandten, radial äußeren Rands des radial erweiterten Endabschnitts 19 mit der Innenwand der Durchgangsöffnung 40 erfolgen.

Anstelle eines Stoffschlusses oder zusätzlich kann auch ein Kraftschluss zwischen dem Funktionsabschnitt 14 und dem Befestigungsabschnitt 12 vorgesehen sein, um die Komponenten axialfest und/oder drehfest miteinander zu koppeln, beispielsweise durch eine Presspassung.

Fig. 6A, 6B zeigen ein Funktionselement 10 gemäß einer dritten Ausführungsform, welche ein Bolzenelement 16 aufweist, das bereits vor dem Einbringen in den Befestigungsabschnitt 12 mit einem Außengewinde 22 versehen ist. Das Außengewinde 22 erstreckt sich nahezu über den gesamten Schaftteil 18 und insbesondere bis zu dem radial erweiterten Endabschnitt 19. Das Bolzenelement 16 ist dazu vorgesehen, mittels eines Schraubwerkzeugs in den Befestigungsabschnitt 12 eingeschraubt zu werden. Als Antriebsprofil für das Schraubwerkzeug ist an einer Stirnfläche des radial erweiterten Endabschnitts 19 ein Kreuzschlitz 100 angeordnet. Das Kopfteil 32 kann in dem ersten Abschnitt 40a ein entsprechendes komplementäres Gewinde aufweisen. Alternativ kann das Bolzenelement 16 auch unter Abschabung von Material in eine glatte Innenwand der Durchgangsöffnung 40 eingeschraubt werden. Dies bietet sich insbesondere an, wenn das Material des Funktionselements 14 härter ist, als das Material des Befestigungsabschnitts 12.

Eine relative Verdrehung von Befestigungselement 12 und Funktionselement 14 in radialer Richtung wird in Einschraubrichtung dadurch verhindert, dass die Schulter 66 eine weitere axiale - und somit radiale - Bewegung des Funktionselements 14 blockiert. Um die radiale - und auch axiale - Bewegung des Funktionselements 14 in Ausschraubrichtung zu blockieren, ist ein in axialer Richtung wirkender Formschluss des radial erweiterten Endabschnitts 19 mit einem sich in radialer Richtung erstreckenden Sicherungsabschnitt, welcher als Hinterschnitt 68 ausgebildet ist, vorgesehen. Der Hinterschnitt 68 kann in einem nachgelagerten Sicherungsschritt durch Abschaben von Material von einer Innenwand des zweiten Abschnitts der Durchgangsöffnung 40b und/oder des Hohlraums 42 erzeugt werden.

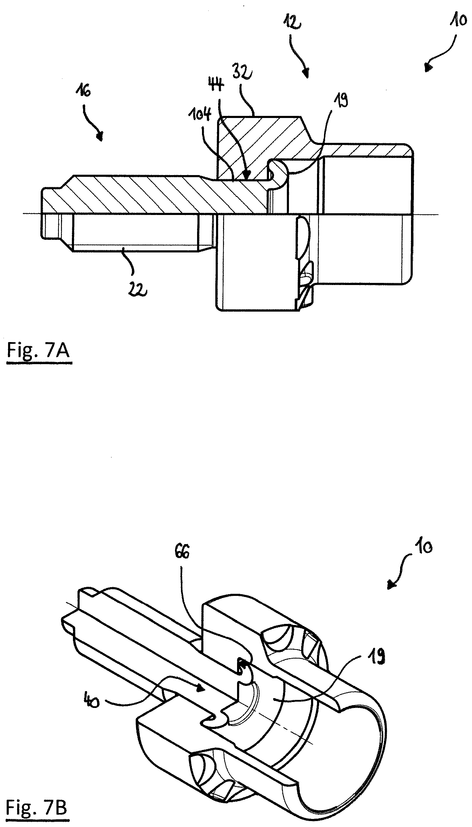

Fig. 7A, 7B zeigen ein Funktionselement 10 gemäß einer vierten Ausführungsform, bei der das Bolzenelement 16 in dem Kopfteil 32 des Befestigungsabschnitts 12 durch ein Nietverfahren befestigt wird. Eine Verdrehsicherung erfolgt wahlweise durch eine Rändelung, Rippen oder andere Verdrehsicherungsmerkmale des Bolzenelements 16 in einem ersten Kopplungsbereich 44, der an dem durch Umformung radial erweiterten Endabschnitt 19 und/oder an einem Abschnitt 104 des Schaftteils 18 angeordnet sein kann, welcher mit dem Kopfteil 32, insbesondere mit einer Innenwand der Durchgangsöffnung 40 des Kopfteils 32, in Eingriff steht.

Eine Sicherung in axialer Richtung erfolgt einerseits durch die Schulter 66 der Durchgangsöffnung 40, welche mit dem radial erweiterten Endabschnitt 19 zusammenwirkt. Zusätzlich können weitere Formschluss- und/oder Kraftschlussbeiträge aus der Nietverbindung zwischen Befestigungsabschnitt 12 und Funktionsabschnitt 14 resultieren, beispielsweise durch Hintergreifen oder Verpressen, welche in eine oder beide axiale Richtungen und/oder in radialer Richtung eine Relativbewegung zwischen Befestigungsabschnitt 12 und Funktionsabschnitt 14 blockieren.

### Bezugszeichenliste

- 10: Funktionselement
- 12: Befestigungsabschnitt
- 14: Funktionsabschnitt
- 16: Bolzenabschnitt
- 18: Schaftteil
- 19: radial erweiterter Endabschnitt
- 20: Funktionsbereich
- 22: Außengewinde
- 26: Umformabschnitt
- 28: Nietabschnitt
- 30: Stanzkante
- 32: Kopfteil
- 34: Kopfteilauflagefläche
- 36: Verdrehsicherungsmerkmal
- 36a: Ausnehmung
- 36b: Erhebung
- 38: axiale Öffnung des Befestigungsabschnitts 12
- 40: Durchgangsöffnung
- 40a: erster Abschnitt der axialen Durchgangsöffnung 40
- 40b: zweiter Abschnitt der axialen Durchgangsöffnung 40
- 42: Hohlraum
- 44: erster Kopplungsabschnitt
- 46: zweiter Kopplungsabschnitt
- 48: Rändelung des ersten Kopplungsabschnitts 44
- 52: Rändelung des zweiten Kopplungsabschnitts 46
- 56: dritter Kopplungsabschnitt
- 58: vierter Kopplungsabschnitt
- 64: sich radial erstreckenden Fläche 64 des radial erweiterten Endabschnitts 19
- 66: Schulter
- 68: Hinterschnitt
- 70: Fixierelement
- 72: Funktionseinheit
- 74: Fixiermutter
- 76: Innengewinde
- 78: Fixierelementanlagefläche
- 80: Kopfteilanlagefläche
- 82: Antriebsprofil
- 84: Angriffsabschnitt
- 86: Setzabschnitt
- 88: ringförmige Setzfläche
- 90: Zusammenbauteil
- 92: Loch
- 94: Stanzbutzen
- 95: Hinterschnitt des Nietabschnitts 28
- 96: domartige Verformung
- 98: Kontaktlinie
- 100: Kreuzschlitz

- L: Längsachse

## Patentansprüche

1. Funktionselement (10), insbesondere Bolzenelement, zur Anbringung an einem Werkstück (24), insbesondere Blechteil, umfassend
einen Befestigungsabschnitt (12), der einen zur Befestigung des Funktionselements (10) an dem Werkstück (24) umformbaren Umformabschnitt (26) aufweist, insbesondere wobei der Umformabschnitt (26) ein Nietabschnitt (28) ist, und
einen Funktionsabschnitt (14) mit einem Funktionsbereich (20), wobei der Funktionsabschnitt (14) mit dem Befestigungsabschnitt (12) verbunden ist,
wobei der Befestigungsabschnitt (12) und der Funktionsabschnitt (14) aus verschiedenen Materialien gefertigt sind und
wobei der Befestigungsabschnitt (12) selbststanzend ausgestaltet ist,
**dadurch gekennzeichnet, dass**
der Funktionsabschnitt (14) drehfest mit dem Befestigungsabschnitt (12) verbunden ist.

2. Funktionselement (10) nach Anspruch 1,
wobei der Befestigungsabschnitt (12) und der Funktionsabschnitt (14) jeweils aus einem metallischen Material gefertigt sind.

3. Funktionselement (10) nach zumindest einem der vorstehenden Ansprüche, wobei der Befestigungsabschnitt (12) einen sich in einer axialen Richtung an den Umformabschnitt (26) anschließenden Kopfteil (32) aufweist, insbesondere wobei der Kopfteil (32) eine sich in radialer Richtung erstreckende, dem Umformabschnitt (26) zugewandte Kopfteilauflagefläche (34) aufweist.

4. Funktionselement (10) nach zumindest einem der vorstehenden Ansprüche, wobei der Funktionsabschnitt (14) einen ersten Kopplungsabschnitt (44) zur Herstellung einer drehfesten Kopplung mit einem zweiten Kopplungsabschnitt (46) aufweist, der an dem Befestigungsabschnitt (12) ausgebildet ist, insbesondere wobei der erste und der zweite Kopplungsabschnitt (44, 46) korrespondierende Kopplungsmerkmale (48, 52) aufweisen, die in Eingriff miteinander stehen, so dass ein in Umfangsrichtung wirksamer Formschluss bereitgestellt wird, und/oder insbesondere wobei der erste und der zweite Kopplungsabschnitt (44, 46) stoffschlüssig und/oder kraftschlüssig miteinander verbunden sind.

5. Funktionselement (10) nach zumindest einem der vorstehenden Ansprüche, wobei der Funktionsabschnitt (14) einen dritten Kopplungsabschnitt (56) zur Herstellung einer zumindest in einer axialen Richtung wirksamen Kopplung mit einem vierten Kopplungsabschnitt (58) aufweist, der an dem Befestigungsabschnitt (12) ausgebildet ist, insbesondere wobei der dritte und der vierte Kopplungsabschnitt (56, 58) korrespondierende Kopplungsmerkmale (64, 66) aufweisen, die in Eingriff miteinander stehen, so dass ein zumindest in einer axialen Richtung wirksamer Formschluss bereitgestellt wird.

6. Funktionselement (10) nach zumindest einem der vorstehenden Ansprüche, wobei der Umformabschnitt (26) zumindest einen axialen Abschnitt eines Hohlraums (42) des Befestigungsabschnitts (12) in Umfangsrichtung begrenzt, wobei der Hohlraum (42) auf der dem Kopfteil (32) abgewandten Seite offen ist, insbesondere wobei der Kopfteil (32) eine axiale Durchgangsöffnung (40) aufweist, die mit dem Hohlraum (42) in Verbindung steht, insbesondere wobei die Durchgangsöffnung (40) und der Hohlraum (42) koaxial angeordnet sind.

7. Funktionselement (10) nach Anspruch 6,
wobei zumindest ein Abschnitt des Funktionsabschnitts (14) in oder durch die Durchgangsöffnung (40) ragt.

8. Funktionselement (10) nach Anspruch 6 oder 7,
wobei die Durchgangsöffnung (40) und/oder der Hohlraum (42) einen Anschlag oder eine radiale Schulter (66) aufweisen oder wobei die Durchgangsöffnung (40) einen kleineren Innendurchmesser als der Hohlraum (42) aufweist, so dass ein Anschlag oder eine radiale Schulter gebildet sind.

9. Funktionselement (10) nach zumindest einem der vorstehenden Ansprüche, wobei der Funktionsabschnitt (14) einen radial erweiterten Endabschnitt (19) aufweist, der mit dem Anschlag oder der Schulter (66) zusammenwirkt.

10. Funktionselement (10) nach zumindest einem der vorstehenden Ansprüche, wobei ein Abschnitt der Innenwand des Hohlraums (42) und/oder der Durchgangsöffnung (40) umgeformt ist, um einen nach radial innen ragenden Hinterschnitt zu erzeugen, insbesondere durch einen Schabprozess.

11. Funktionseinheit (72), umfassend ein Funktionselement (10) gemäß einem der vorstehenden Ansprüche und ein Fixierelement (70), das insbesondere lösbar an dem Funktionsbereich (20) des Funktionselements (10) fixierbar ist, insbesondere wobei das Fixierelement (70) eine Fixierelementanlagefläche (78) aufweist, die in einem an dem Funktionselement (10) montierten Zustand des Fixierelements dem Kopfteil (32) des Befestigungsabschnitts (12) zugewandt ist, insbesondere wobei das Fixierelement (70) einen Angriffsabschnitt (84) für eine Werkzeug zur Befestigung des Fixierelements (70) an dem Funktionsbereich (20), insbesondere ein Formmerkmal (82), und/oder einen Setzabschnitt (86), insbesondere eine im Wesentlichen ringförmige Setzfläche (88), aufweist, der zum Angreifen einer Setzeinrichtung zur Befestigung der Funktionseinheit (72) an dem Werkstück (24) geeignet ist.

12. Zusammenbauteil (90), umfassend ein Funktionselement (10) oder Funktionseinheit (72) nach zumindest einem der vorstehenden Ansprüche und ein Werkstück (24), insbesondere Blechteil,
wobei der Befestigungsabschnitt (12) des Funktionselements (10) an dem Werkstück (24) in einem Befestigungsbereich des Werkstücks (24) formschlüssig durch ein Umformverfahren angebracht ist, insbesondere durch ein Nietverfahren.

13. Zusammenbauteil (90) nach Anspruch 12,
wobei der Umformabschnitt (26) des Befestigungsabschnitts (12), insbesondere der gesamte Befestigungsabschnitt (12), und der Befestigungsbereich des Werkstücks (24), insbesondere das gesamte Werkstück (24), aus dem gleichen Material gefertigt sind.

14. Verfahren zur Herstellung eines Zusammenbauteils (90) nach Anspruch 12 oder 13, mit den Schritten:
- Bereitstellen eines Funktionselements (10) gemäß einem der Ansprüche 1 bis 10 oder einer Funktionseinheit (72) gemäß Anspruch 11,
- Einbringen des Befestigungsabschnitts (12) in ein vorgefertigtes Loch in dem Werkstück (24) oder selbststanzendes Einbringen des Befestigungsabschnitts (12) in das Werkstück (24),
- Umformen des Umformabschnitts (26) zur Erzeugung eines das Werkstück hintergreifenden Hinterschnitts (95) zur Befestigung des Funktionselements (10) oder der Funktionseinheit (72) an dem Werkstück, insbesondere wobei eine Setzeinrichtung vorgesehen ist, die mit dem Befestigungsabschnitt (12), insbesondere einem Kopfteil (32) des Befestigungsabschnitts (12), oder dem Fixierelement (74), insbesondere einem Setzabschnitt (86), zusammenwirkt, um das Funktionselement (10) oder die Funktionseinheit (72) gegen das Werkstück (24) zu pressen.

## Claims

1. A functional element (10), in particular a bolt element, for attachment to a workpiece (24), in particular a sheet metal part, said functional element (10) comprising
a fastening section (12) that has a reshaping section (26) which can be reshaped to fasten the functional element (10) to the workpiece (24), in particular wherein the reshaping section (26) is a rivet section (28), and
a functional section (14) having a functional region (20), wherein the functional section (14) is connected to the fastening section (12),
wherein the fastening section (12) and the functional section (14) are produced from different materials, and
wherein the fastening section (12) has a self-punching design,
**characterized in that**
the functional section (14) is rotationally fixedly connected to the fastening section (12).

2. A functional element (10) according to claim 1,
wherein the fastening section (12) and the functional section (14) are each produced from a metallic material.

3. A functional element (10) according to at least one of the preceding claims, wherein the fastening section (12) has a head part (32) adjoining the reshaping section (26) in an axial direction, in particular wherein the head part (32) has a head part support surface (34) extending in a radial direction and facing the reshaping section (26).

4. A functional element (10) according to at least one of the preceding claims, wherein the functional section (14) has a first coupling section (44) for establishing a rotationally fixed coupling with a second coupling section (46) which is formed at the fastening section (12), in particular wherein the first and the second coupling section (44, 46) have corresponding coupling features (48, 52) which are in engagement with one another so that a form fit effective in a peripheral direction is provided, and/or in particular wherein the first and the second coupling section (44, 46) are connected to one another in a form-fitted and/or force-fitted manner.

5. A functional element (10) according to at least one of the preceding claims, wherein the functional section (14) has a third coupling section (56) for establishing a coupling effective at least in an axial direction with a fourth coupling section (58) which is formed at the fastening section (12), in particular wherein the third and the fourth coupling section (56, 58) have corresponding coupling features (64, 66) which are in engagement with one another so that a form fit effective at least in an axial direction is provided.

6. A functional element (10) according to at least one of the preceding claims, wherein the reshaping section (26) bounds at least an axial section of a hollow space (42) of the fastening section (12) in the peripheral direction, wherein the hollow space (42) is open at the side facing away from the head part (32), in particular wherein the head part (32) has an axial passage opening (40) which is in communication with the hollow space (42), in particular wherein the passage opening (40) and the hollow space (42) are coaxially arranged.

7. A functional element (10) according to claim 6,
wherein at least one portion of the functional section (14) projects into or through the passage opening (40).

8. A functional element (10) according to claim 6 or 7,
wherein the passage opening (40) and/or the hollow space (42) has/have an abutment or a radial shoulder (66), or wherein the passage opening (40) has a smaller inner diameter than the hollow space (42) so that an abutment or a radial shoulder is formed.

9. A functional element (10) according to at least one of the preceding claims, wherein the functional section (14) has a radially expanded end section (19) which cooperates with the abutment or the shoulder (66).

10. A functional element (10) according to at least one of the preceding claims, wherein a section of the inner wall of the hollow space (42) and/or a section of the passage opening (40) is/are reshaped to produce a radially inwardly projecting undercut, in particular by a scraping process.

11. A functional unit (72) comprising a functional element (10) according to any one of the preceding claims and a fixing element (70) which is fixable, in particular releasably fixable, to the functional region (20) of the functional element (10), in particular wherein the fixing element (70) has a fixing element contact surface (78) which faces the head part (32) of the fastening section (12) in a state of the fixing element mounted at the functional element (10), in particular wherein the fixing element (70) has an engagement section (84) for a tool for fastening the fixing element (70) to the functional region (20), in particular a shape feature (82), and/or a setting section (86), in particular a substantially annular setting surface (88), said setting section (86) being suitable for engaging at a setting device to fasten the functional unit (72) to the workpiece (24).

12. A component assembly (90) comprising a functional element (10) or a functional unit (72) according to at least one of the preceding claims and a workpiece (24), in particular a sheet metal part,
wherein the fastening section (12) of the functional element (10) is attached in a form-fitted manner to the workpiece (24) in a fastening region of the workpiece (24) by a reshaping process, in particular by a riveting process.

13. A component assembly according to claim 12,
wherein the reshaping section (26) of the fastening section (12), in particular the total fastening section (12), and the fastening region of the workpiece (24), in particular the total workpiece (24), are produced from the same material.

14. A method of manufacturing a component assembly (90) according to claim 12 or 13, comprising the steps:
- providing a functional element (10) according to any one of the claims 1 to 10 or a functional unit (72) according to claim 11;
- inserting the fastening section (12) into a prefabricated hole in the workpiece (24) or inserting the fastening section (12) into the workpiece (24) in a self-punching manner; and
- reshaping the reshaping section (26) to produce an undercut (95) engaging behind the workpiece in order to fasten the functional element (10) or the functional unit (72) to the workpiece, in particular wherein a setting device is provided which cooperates with the fastening section (12), in particular with a head part (32) of the fastening section (12), or with the fixing element (74), in particular with a setting section (86), to press the functional element (10) or the functional unit (72) against the workpiece (24).

## Revendications

1. Elément fonctionnel (10), en particulier élément formant boulon, destiné à être monté sur une pièce à oeuvrer (24), en particulier sur une pièce en tôle, comprenant
une portion de fixation (12) qui présente une portion de déformation (26) susceptible d'être déformée pour fixer l'élément fonctionnel (10) sur la pièce à oeuvrer (24), en particulier la portion de déformation (26) étant une portion de rivetage (28), et
une portion fonctionnelle (14) ayant une zone fonctionnelle (20), la portion fonctionnelle (14) étant reliée à la portion de fixation (12),
la portion de fixation (12) et la portion fonctionnelle (14) étant fabriquées dans des matériaux différents, et
la portion de fixation (12) étant réalisée de manière auto-perforant, **caractérisé en ce que**
la portion fonctionnelle (14) est reliée solidairement en rotation à la portion de fixation (12).

2. Elément fonctionnel (10) selon la revendication 1,
dans lequel la portion de fixation (12) et la portion fonctionnelle (14) sont fabriquées chacune dans un matériau métallique.

3. Elément fonctionnel (10) selon l'une au moins des revendications précédentes,
dans lequel la portion de fixation (12) présente une partie de tête (32) se raccordant à la portion de déformation (26) dans une direction axiale,
en particulier, la partie de tête (32) présente une surface d'appui de partie de tête (34) s'étendant dans une direction radiale et tournée vers la portion de déformation (26).

4. Elément fonctionnel (10) selon l'une au moins des revendications précédentes,
dans lequel la portion fonctionnelle (14) comprend une première portion d'accouplement (44) destinée à établir un accouplement solidaire en rotation avec une deuxième portion d'accouplement (46) réalisée sur la portion de fixation (12),
en particulier, les première et deuxième portions d'accouplement (44, 46) présentent des caractéristiques d'accouplement correspondantes (48, 52) qui sont en prise l'une avec l'autre, de manière à assurer une liaison par coopération de forme agissant dans la direction périphérique, et/ou
en particulier, les première et deuxième portions d'accouplement (44, 46) sont reliées l'une à l'autre par coopération de matière et/ou par coopération de force.

5. Elément fonctionnel (10) selon l'une au moins des revendications précédentes,
dans lequel la portion fonctionnelle (14) présente une troisième portion d'accouplement (56) destinée à établir un accouplement, agissant au moins dans une direction axiale, avec une quatrième portion d'accouplement (58) réalisée sur la portion de fixation (12),
en particulier, les troisième et quatrième portions d'accouplement (56, 58) présentent des caractéristiques d'accouplement correspondantes (64, 66) qui sont en prise l'une avec l'autre, de manière à assurer une liaison par coopération de forme agissant au moins dans une direction axiale.

6. Elément fonctionnel (10) selon l'une au moins des revendications précédentes,
dans lequel la portion de déformation (26) délimite au moins une portion axiale d'une cavité (42) de la portion de fixation (12) dans la direction périphérique, la cavité (42) étant ouverte du côté détourné de la partie de tête (32),
en particulier, la partie de tête (32) présente une ouverture axiale de passage (40) qui communique avec la cavité (42),
en particulier, l'ouverture de passage (40) et la cavité (42) sont disposées coaxialement.

7. Elément fonctionnel (10) selon la revendication 6,
dans lequel au moins une portion de la portion fonctionnelle (14) dépasse dans ou à travers l'ouverture de passage (40).

8. Elément fonctionnel (10) selon la revendication 6 ou 7,
dans lequel l'ouverture de passage (40) et/ou la cavité (42) présente(nt) une butée ou un épaulement radial (66), ou
l'ouverture de passage (40) présente un diamètre intérieur inférieur à celui de la cavité (42), de manière à former une butée ou un épaulement radial.

9. Elément fonctionnel (10) selon l'une au moins des revendications précédentes,
dans lequel la portion fonctionnelle (14) présente une portion d'extrémité (19) élargie radialement, qui coopère avec la butée ou avec l'épaulement (66).

10. Elément fonctionnel (10) selon l'une au moins des revendications précédentes,
dans lequel une portion de la paroi intérieure de la cavité (42) et/ou de l'ouverture de passage (40) est déformée pour créer une contre-dépouille dépassant radialement vers l'intérieur, en particulier par un processus de grattage.

11. Unité fonctionnelle (72), comprenant un élément fonctionnel (10) selon l'une des revendications précédentes et un élément de fixation (70) susceptible d'être fixé en particulier de manière amovible sur la zone fonctionnelle (20) de l'élément fonctionnel (10),
dans laquelle
en particulier, l'élément de fixation (70) présente une surface d'appui d'élément de fixation (78) qui, dans un état de l'élément de fixation monté sur l'élément fonctionnel (10), est tournée vers la partie de tête (32) de la portion de fixation (12),
en particulier, l'élément de fixation (70) présente une portion d'engagement (84) pour un outil de fixation de l'élément de fixation (70) sur la zone fonctionnelle (20), en particulier une caractéristique de forme (82) et/ou une portion de pose (86), en particulier une surface de pose (88) sensiblement annulaire, qui est adaptée pour engager un dispositif de pose destiné à fixer l'unité fonctionnelle (72) sur la pièce à oeuvrer (24).

12. Pièce d'assemblage (90), comprenant un élément fonctionnel (10) ou une unité fonctionnelle (72) selon l'une au moins des revendications précédentes et une pièce à oeuvrer (24), en particulier une pièce en tôle,
dans laquelle la portion de fixation (12) de l'élément fonctionnel (10) est montée par coopération de forme sur la pièce à oeuvrer (24) dans une zone de fixation de la pièce à oeuvrer (24) par un procédé de déformation, en particulier par un procédé de rivetage.

13. Pièce d'assemblage (90) selon la revendication 12,
dans laquelle la portion de déformation (26) de la portion de fixation (12), en particulier toute la portion de fixation (12), et la zone de fixation de la pièce à oeuvrer (24), en particulier toute la pièce à oeuvrer (24), sont fabriquées dans le même matériau.

14. Procédé de fabrication d'une pièce d'assemblage (90) selon la revendication 12 ou 13, comprenant les étapes consistant à :
- fournir un élément fonctionnel (10) selon l'une des revendications 1 à 10 ou une unité fonctionnelle (72) selon la revendication 11,
- insérer la portion de fixation (12) dans un trou préformé dans la pièce à oeuvrer (24) ou insérer par auto-perforation la portion de fixation (12) dans la pièce à oeuvrer (24),
- déformer la portion de déformation (26) pour créer une contre-dépouille (95), engageant par l'arrière la pièce à oeuvrer, pour fixer l'élément fonctionnel (10) ou l'unité fonctionnelle (72) sur la pièce à oeuvrer,
dans lequel
en particulier, il est prévu un dispositif de pose qui coopère avec la portion de fixation (12), en particulier avec une partie de tête (32) de la portion de fixation (12), ou avec l'élément de fixation (74), en particulier avec une portion de pose (86), pour presser l'élément fonctionnel (10) ou l'unité fonctionnelle (72) contre la pièce à oeuvrer (24).
